# EUROPEAN PATENT SPECIFICATION

(11) **EP 3 913 246 B1**
(45) Date of publication and mention of the grant of the patent: **24.04.2024**
(21) Application number: 20382422.2
(22) Date of filing: 19.05.2020
(51) Int. Cl.: F16C 33/08, F16C 35/02, F16C 35/077, F16C 23/04

(54) **BUSHING AND REPAIRING METHOD FOR A DAMAGED HOUSING FOR A BEARING**
BUCHSE UND REPARATURVERFAHREN FÜR EIN BESCHÄDIGTES GEHÄUSE FÜR EIN LAGER
DOUILLE ET PROCÉDÉ DE RÉPARATION D'UN BOÎTIER ENDOMMAGÉ D'UN PALIER

(43) Date of publication of application: 24.11.2021
(73) Proprietor: Airbus Operations, S.L.U., 28906 Getafe (Madrid) (ES)
(72) Inventor: GARCIA SANCHEZ, Juan Antonio, 28906 Madrid (ES); LÓPEZ LÓPEZ, Ladislao, 28906 Getafe (ES)
(74) Representative: Elzaburu S.L.P.

(56) References cited:
- EP-A1- 3 002 472
- US-A- 3 506 315
- US-A- 3 662 462

## Description

### Field of the invention

The present invention relates to a bushing and a repairing method for a damaged housing for a bearing. The invention solves the problem of damaged housings which need repair solutions of considerable thickness where known sleeves are not usable.

### Background of the invention

A housing or fitting is adapted to house a bearing inside and to keep it fixed to the housing, without movement or rotation, for instance using some notches. These bearings cause wear on the housing and, at some point, the bearing starts to rotate inside the housing.

Known repair solutions, when the housing of a bearing is damaged, consist in the installation of different kind of sleeves between the bearing and the housing with diverse swaging methods for fixing them to the housing.

Usually, in order to solve this wear problem, the inner hole of the housing is machined, and the sleeve is installed between the housing and the bearing. The sleeve is placed between the repaired housing and the bearing and its sides are pressed in order to secure the bearing to the housing. The sleeve and the bearing are swaged to assist in retaining and preventing relative movement between the bearing, the sleeve and the housing.

It is known document EP3002472 disclosing a bearing that includes an outer sleeve that defines a first exterior surface and a first interior area. The first interior area is defined by a first inner surface. The first inner surface has a first fastener mechanism formed therein. The outer ring includes an inner sleeve that defines a second exterior surface and a second interior area. The second interior area is defined by a second inner surface. The second exterior surface has a second fastener mechanism formed therein. The inner sleeve is removably disposed in the first interior area by selective engagement of the first fastener mechanism with the second fastener mechanism. The outer sleeve surrounds the inner sleeve and extends axially from a first end to a second end thereof. The inner sleeve extends from the first end to the second end of the outer sleeve.

### Summary of the invention

The invention relates to a bushing adapted to be placed between the bearing and the housing and then to secure it to the housing and to the bearing.

The bushing object of the invention comprises a cylindrical hollow element having a longitudinal axis and it further comprises:
- an inner surface configured to be in contact with the bearing,
- an outer surface configured to be in contact with the housing and located radially outside the inner surface,
- a first end surface located at a longitudinal end of the bushing and a second end surface located at an opposite longitudinal end of the bushing.

The bushing further comprises an outer radial portion adjacent to the outer surface and an inner radial portion adjacent to the inner surface. Radial portion is to be interpreted as a cylindrical portion of the bushing. The outer radial portion is a radial portion that comprises the outer surface of the bushing and the inner portion is a radial portion that comprises the inner surface of the bushing.

Additionally, only the outer radial portion of the bushing comprises at least a deformable tip.

It means that at least one of the first end surface and the second end surface comprises a deformable tip in said outer radial portion.

A tip has to be understood as a small piece of the bushing serving as pointed element.

In an embodiment, the tip is formed by a first surface and a second surface. The first surface is a portion of the outer surface of the bushing, i.e., the deformable tip does not protrude from the outer surface of the bushing as it is limited by it.

In an embodiment, the deformable tip is configured to be deformed by swaging until its first surface contacts the housing for securing the bushing to the housing. Thus, in the deformed state the tip protrudes from the outer surface of the bushing and somehow embraces the housing.

The deformable tip or tips having a portion of the outer surface, i.e., said tips or tips located in the outer radial portion, are the only tips of the bushing configured to be deformed by swaging. Thus, the inner radial portion of the bushing is not deformed by swaging.

Swaging has to be interpreted as shaping by means of a swage which is a tool used by metalworkers for shaping their work by holding it on the work or the work on it and striking with a hammer or sledge.

According to the above, the area of the bushing in contact with the housing is deformable as it comprises a deformable tip in order to easy its deformation.

The housing inner side is machined, for instance sanded, before introducing the bushing and the new dimensions are recalculated in order to check that it fulfils with the structural requirements.

The advantage is that this repair bushing can replace the damaged thickness without impacting the lateral free space of the bearing, so is very suitable in reduced spaces like male-female hinge fittings. The inner surface of the bushing has the same dimensions than the inner surface of the housing before being damaged and thus the same size of bearing can be used after repairing.

Thus, the same bearing can be mounted. Therefore, there is no need for a bearing with a larger diameter which would generally have a larger longitudinal length. A larger bearing would indeed be impossible in some reduced assemblies as pointed above.

The claimed invention will also avoid the need of formation of new chamfers for the mounting and/or swaging of the repair bushing.

Finally, the invention allows to have a standard repair bushing and do not require loads recalculation for each repair.

It is also an object of the present invention, a repairing method for a damaged housing for a bearing. The method comprises the following steps:
- providing a bushing according to the above described,
- inserting the bushing into the housing, and
- swaging only the deformable tip located in the outer radial portion against the housing for securing the bushing to the housing. Thus, the inner surface of the bushing is not deformed by swaging.

In an embodiment, said deformable tip is swaged until its first surface contacts the housing.

### Description of the figures

To complete the description and in order to provide for a better understanding of the invention, a set of drawings is provided. Said drawings form an integral part of the description and illustrate preferred embodiments of the invention. The drawings comprise the following figures.
Figure 1 shows exploded perspective view of a housing, a bushing and a bearing according to one embodiment of the invention.
Figure 2 shows a schematic view of a cross-section of a portion of a housing, a bushing and a bearing in a mounted position according to one embodiment of the invention.
Figure 3 shows a perspective view of a housing, a bushing and a bearing in a mounted position according to one embodiment of the invention.
Figure 4 shows a perspective view of a bushing according to another embodiment of the invention.
Figure 5 shows cross-section of an embodiment of a bearing, a bushing and a housing comprising a greasing channel.

### Detailed description of the invention

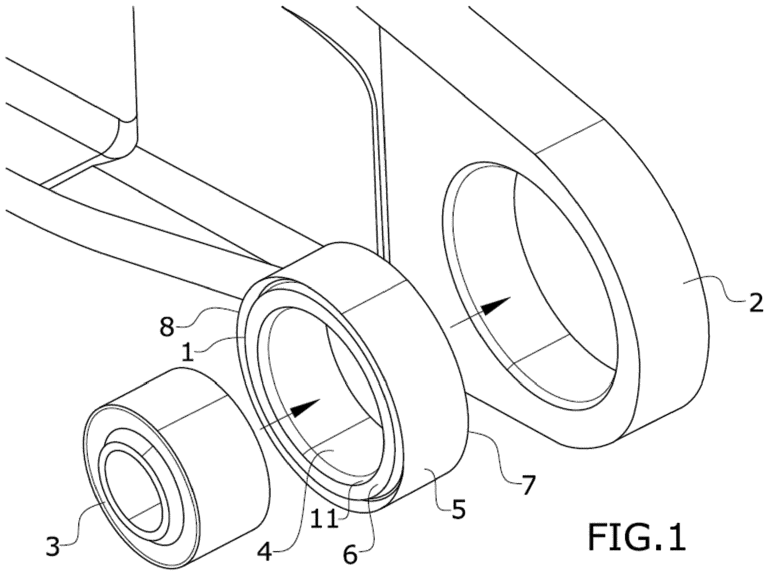

Figures 1, 2 and 3 disclose a first embodiment of the invention.

Specifically, the figures disclose embodiments of a bushing (1) for a damaged housing (2) of a bearing (3). The bushing (1) comprises a cylindrical hollow element comprising a longitudinal axis. The bushing (1) comprises an inner surface (4) configured to be in contact with the bearing (3). The bushing (1) also comprises an outer surface (5) configured to be in contact with the housing (2) and located radially outside the inner surface (4). It also comprises a first end surface (6) and a second end surface (7) located in the longitudinal direction of the bushing (1).

The bushing (1) comprises an outer radial portion adjacent to the outer surface (5) and an inner radial portion adjacent to the inner surface (4). Only the outer radial portion comprises at least a deformable tip (9).

More specially, the inner radial portion does not comprise a deformable tip (9).

In all the shown embodiments, at least one of the first end surface (6) and the second end surface (7) comprises the deformable tip (9). In the shown embodiments, the deformable tip (9) comprises a first surface (9.1) and a second surface (9.2).

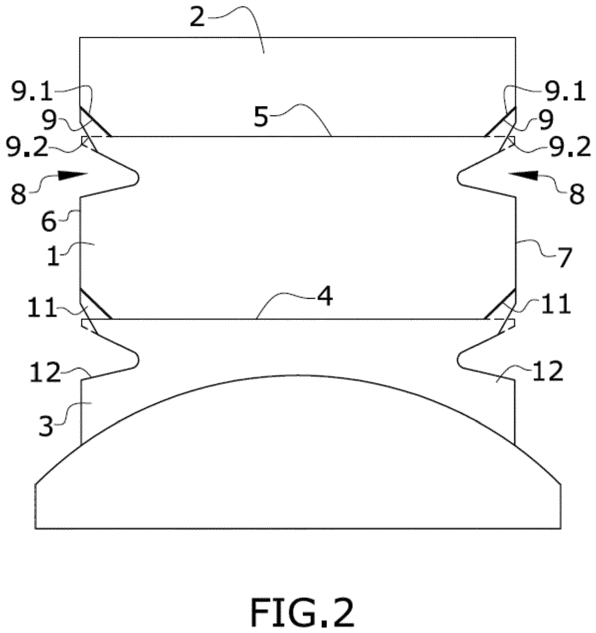

The first surface (9.1) is a portion of the outer surface (5) of the bushing (1) and is configured to be deformed by swaging until its first surface (9.1) contacts the housing (2) for securing the bushing (1) to the housing (2) as can be seen in both ends (6, 7) of the embodiment of figure 2.

In figures 1 to 3, both end surfaces (6, 7) comprise the deformable tip (9). The first surface (9.1) of the deformable tip (9) is a portion of the outer surface (5) of the bushing (1). In this way the deformable tip (9) does not protrude from the outer surface (5) and the bushing (1) can be introduced into the housing (2).

Both deformable tips (9) are configured to be deformed by swaging until their first surfaces (9.1) contact the housing (2) for securing the bushing (1) to the housing (2).

In the shown embodiments, the deformable tip (9) has a continuous rim shape around the end surface (6, 7).

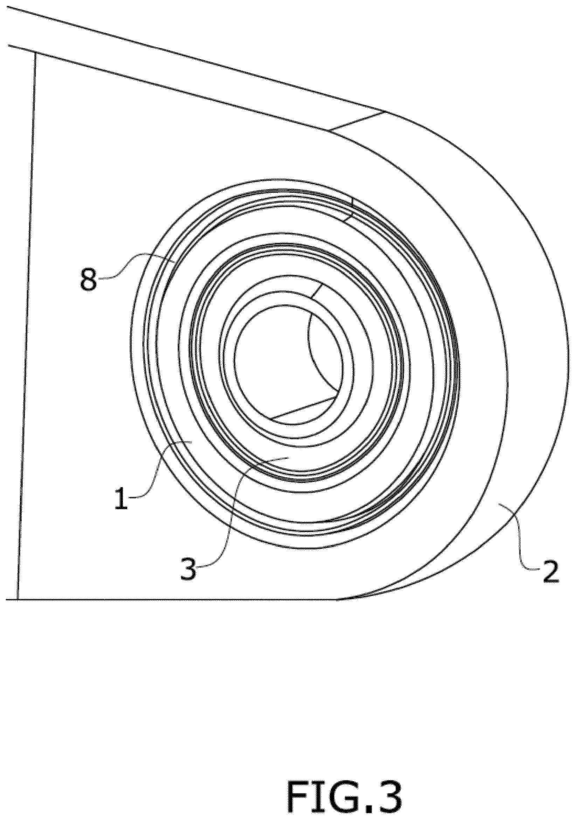

Additionally, figures 1 or 3 show the second end surface (7) and/or the first end surface (6) also comprising a groove (8) located in the proximity of the outer surface (5) of the bushing (1) such that the second surface (9.2) of the deformable tip (9) is a portion of the surface of the groove (8). Specifically, in the embodiment shown in figures 1 to 3 both the first end surface (6) and the second end surface (7) comprise said groove (8).

The deformable tip (9) is thus formed between the outer surface (5) and the groove (8).

In the embodiment shown in figures 1 to 3, the groove (8) is a V-groove.

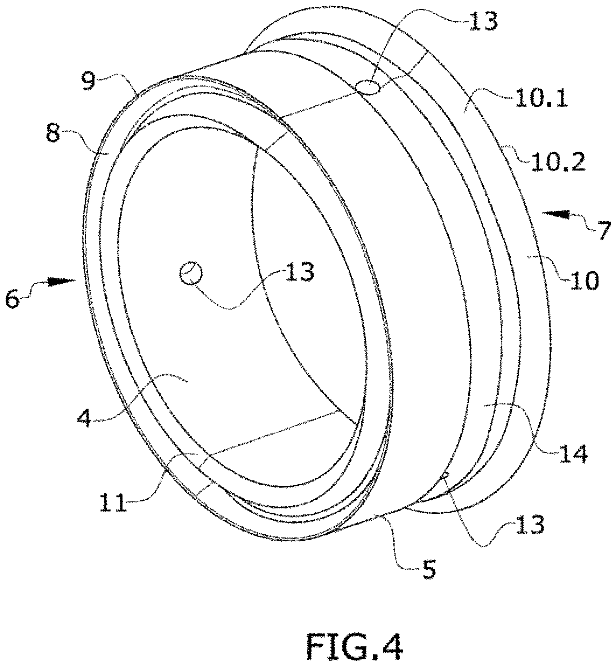

Figure 4 discloses a second embodiment in which the second end surface (7) comprises a flange (10). The flange (10) comprises a first surface (10.1) and a second surface (10.2). The first surface (10.1) forms an angle with the outer surface (5) of the bushing (1). The first surface (10.1) is configured to be located in contact with the housing (2) for securing the bushing (1) to the housing (2).

A flange (10) has to be interpreted as a rib or rim projecting from the outer surface (5). The flange (10) is formed on the outer surface (5) adjacent to the second end surface (7). As previously explained for the deformable tip (9), the first surface (10.1) of the flange (10) is configured to be located against the housing (2) for securing the bushing (1) to the housing (2).

The flange (10) has a continuous rim shape around the outer surface (5).

The flange (10) may comprise the same shape that the deformable tip (9) of the V-groove (8) would have after the deformation made by swaging in the first embodiment.

The flange (10) may be machined before introducing the bushing (1) into the housing (2) and, thus, this embodiment only requires to deform one end (6, 7) of the bushing (1) after introduction into the housing (1). Alternatively, the flange (10) can be directly manufactured this way.

The flange (10) is non-deformable, or at least under standard forces, such that its mechanical resistance is much higher than that of a deformable tip (9) that has been swaged.

The inner surface (4) of the bushing (1) comprises dimensions and tolerances of housings (2) for the installation of bearings (3). Its dimensions are beneficially those of the original bearing (3) before repair, such that the same bearing (3) model may be installed. It implies no load recalculation, no re-certification, scale economies, etc.

In both embodiments, the inner surface (4) of the bushing (1) comprises a chamfered edge (11) with the first and the second end surfaces (6, 7). Thus, the area of contact of the bushing (1) with the bearing (3) is non-deformable. According to the above, only the area of the bushing (1) close to the housing (2) is deformed. This leads to less time employed in the repair tasks and more robustness of the final ensemble.

The bearing (3) is deformed in order to secure it to the bushing (1). The bearing (3) may comprise V-grooves (12) in its first and second end surfaces to be deformed to secure it to the bushing (1) as shown in figure 2.

Therefore, the area in contact with the housing (2) is deformable while the area in contact with the bearing (3) is non-deformable.

In an embodiment, the ratio between the radial thickness and the longitudinal width of the bushing (1) is greater than 0,25, preferably in the proximity of 0,30.

Also, an object of the present invention is a repairing method for a damaged housing (2) for a bearing (3). The method comprises the following steps:
- providing a bushing (1) according to one of the above embodiments,
- inserting the bushing (1) into the housing (2), and
- swaging only the deformable tip (9) located in the outer radial portion against the housing (2) for securing the bushing (1) to the housing (2). Thus, the inner surface (4) is not deformed by swaging.

In an embodiment, the deformable tip (9) is swaged until its first surface (9.1) contacts the housing (2).

In an embodiment, the method comprises the step of machining the inner surface of the damaged housing (2) before inserting the bushing (1) into the housing (2).

Specifically, for the first embodiment disclosed in figures 1 to 3, the two deformable tips (9) of the first (6) and the second end surface (7) are deformed by swaging until their first surfaces (9.1) contact the housing (2) in order to secure the bushing (1) to the housing (2). Additionally, the bearing (3) is deformed by swaging to adapt it to the bushing (1).

For the second embodiment shown in figure 4, as the flange (10) has already been swaged into the bushing (1), it is only needed to swage the deformable tip (9) of the opposite end against the housing (2) for securing the bushing (1) to the housing (2).

The second method is a variation of the first one, both consisting in placing the claimed bushing (1) between the bearing (3) and the housing (2). One end (6, 7) of the bushing (1) is manufactured with the flange (10) with the shape required to secure the bushing (1) to the housing (10). This shape may be the same shape that the deformable tip (9) would have after the deformation made in the first method.

In this second method, the following steps are performed:
- introducing the bushing (1) into the housing (2) from the end side (6, 7) comprising the deformable tip (9) until the first surface (10.1) of the flange (10) located in the opposite side (6, 7) contacts the housing (2),
- swaging the deformable tip (9) against the housing (2) for securing the bushing (1) to the housing (2).

Another characteristic of this invention is to provide a system to grease the bearing (3). This system consists on a greasing channel (13) to allow a flow of grease between the exterior of the housing (2) and the inner surface of it (2). The bushing (1) comprises a greasing channel (13) which gets the flow which arrives to the inner surface of the housing (2).

The bushing (1) comprises a greasing channel (13) having a longitudinal axis, the greasing channel (13) communicating the outer surface (5) to the inner surface (4) of the bushing (1). The greasing channel (13) allows a flow to the bearing (3) greasing channel.

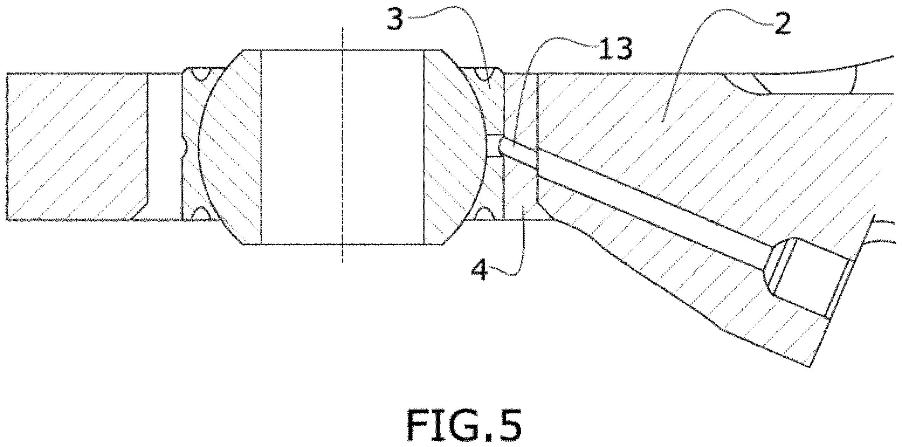

In the cross section of the components in figure 5, it can be observed that the greasing channel (13) has some inclination, in order to easy the greasing process. The longitudinal axis of the greasing channel (13) forms a non-null angle with the radial direction of the bushing (1).

In the embodiment shown in figure 4, the bushing (1) comprises more than one greasing channel (13), specifically three greasing channels (13).

Having more than one greasing channel (13) facilitates introduction of grease into the bearing (3) because both the bushing (1) and the bearing (3) may rotate around the longitudinal axis during use. This also allows to distribute the grease at different points around the bearing (3).

The greasing channels (13) are also distributed around the outer surface (5).

Additionally, the outer surface (5) comprises a peripheric groove (14) extending along the outer surface (5) between the greasing channels (13). The peripheric groove (14) forms a channel with the housing (2) once mounted so that the grease may circulate from the housing (2) channel to one or more of the channels (13) of the bushing (1) in case they are not in front of each other. It facilitates the assembly of the bushing (1) as the channels (13) do not need to be facing each other.

## Claims

1. Bushing (1) comprising a one-piece cylindrical hollow element having a longitudinal axis and comprising:
- an inner surface (4) configured to be in contact with a bearing (3),
- an outer surface (5) configured to be in contact with a housing (2) and located radially outside the inner surface (4),
- a first end surface (6) located at a longitudinal end of the bushing (1) and a second end surface (7) located at an opposite longitudinal end of the bushing (1),
**characterised in that** the bushing (1) comprises an outer radial portion adjacent to the outer surface (5) and an inner radial portion adjacent to the inner surface (4) and **in that** only the outer radial portion comprises at least a deformable tip (9) wherein the inner surface (4) of the bushing (1) comprises a chamfered edge (11) between the inner surface (4) and at least one of the first and the second end surfaces (6, 7).

2. Bushing (1), according to claim 1, wherein the inner radial portion does not comprise a deformable tip (9).

3. Bushing (1), according to claim 1, wherein the outer surface (5) adjacent the first end surface (6) or second end surface (7) comprises a flange (10), the flange (10) comprising a first surface (10.1) and a second surface (10.2), the first surface (10.1) forming an angle with the outer surface (5) of the bushing (1), said first surface (10.1) being configured to be located in contact with the housing (2).

4. Bushing (1), according to claim 3, wherein the flange (10) has a continuous rim shape around the outer surface (5).

5. Bushing (1), according to any preceding claim, wherein the deformable tip (9) has a continuous rim shape around the end surface (6, 7).

6. Bushing (1), according to any preceding claim, wherein the deformable tip (9) comprises a first surface (9.1) and a second surface (9.2), the first surface (9.1) being a portion of the outer surface (5) of the bushing (1) and wherein one of the first end surface (6) and the second end surface (7) comprises a groove (8) located in the proximity of the outer surface (5) of the bushing (1) such that the second surface (9.2) of the deformable tip (9) is a portion of the surface of the groove (8).

7. Bushing (1), according to claim 6, wherein the groove (8) is a V-groove.

8. Bushing (1), according to any preceding claim, wherein the bushing (1) comprises at least one greasing channel (13) having a longitudinal axis, the greasing channel (13) communicating the outer surface (5) to the inner surface (4).

9. Bushing (1), according to claim 8, wherein the longitudinal axis of the greasing channel (13) forms a non-null angle with the radial direction of the bushing (1).

10. Bushing (1), according to claim 8 or 9, wherein it comprises more than one greasing channel (13), the greasing channels (13) being distributed around the outer surface (5) and the outer surface (5) also comprising a peripheric groove (14) extending along the outer surface (5) between the greasing channels (13).

11. Repairing method for a damaged housing (2) for a bearing (3), the method comprising the following steps:
- providing a bushing (1) according to claim 1,
- machining the inner surface of the damaged housing (2),
- inserting the bushing (1) into the housing (2) after machining the inner surface of the damaged housing (2), and
- swaging only the deformable tip (9) located in the outer radial portion against the housing (2).

12. Repairing method for a damaged housing (2) of a bearing (3), according to claim 11 , wherein the method additionally comprises the following steps:
- providing a bushing (1) with two deformable tips (9) located in the outer radial portion, one in the outer surface (5) and one in the inner surface (4),
- swaging both deformable tips (9) against the housing (2).

13. Repairing method for a damaged housing (2) of a bearing (3), according to claims 11 or 12, wherein the method additionally comprises the following steps:
- providing a bushing (1) according to claim 3,
- introducing the bushing (1) into the housing (2) from the end side (6, 7) comprising the deformable tip (9) until the first surface (10.1) of the flange (10) located in the opposite side (6, 7) contacts the housing (2),
- swaging the deformable tip (9) against the housing (2).

## Patentansprüche

1. Lagerbuchse (1), umfassend ein einstückiges, zylindrisches Hohlelement mit einer Längsachse und Folgendes umfassend:
- eine Innenoberfläche (4), die dafür gestaltet ist, in Kontakt mit einem Lager (3) zu stehen,
- eine Außenoberfläche (5), die dafür gestaltet ist, in Kontakt mit einem Gehäuse (2) zu stehen, und die sich radial außen liegend von der Innenfläche (4) befindet,
- eine erste Endoberfläche (6), die sich an einem Längsende der Lagerbuchse (1) befindet, und eine zweite Endoberfläche (7), die sich an einem gegenüberliegenden Längsende der Lagerbuchse (1) befindet,
**dadurch gekennzeichnet, dass** die Lagerbuchse (1) einen äußeren radialen Abschnitt umfasst, der an die Außenoberfläche (5) angrenzt, und einen inneren radialen Abschnitt, der an die Innenoberfläche (4) angrenzt, und dadurch, dass nur der äußere radiale Abschnitt mindestens eine verformbare Spitze (9) umfasst, wobei die Innenoberfläche (4) der Lagerbuchse (1) einen gefasten Rand (11) zwischen der Innenoberfläche (4) und mindestens einer von der ersten und der zweiten Endoberfläche (6, 7) umfasst.

2. Lagerbuchse (1) nach Anspruch 1, wobei der innere radiale Abschnitt keine verformbare Spitze (9) umfasst.

3. Lagerbuchse (1) nach Anspruch 1, wobei die Außenoberfläche (5) angrenzend an die erste Endoberfläche (6) oder die zweite Endoberfläche (7) einen Flansch (10) umfasst, wobei der Flansch (10) eine erste Oberfläche (10.1) und eine zweite Oberfläche (10.2) umfasst, wobei die erste Oberfläche (10.1) einen Winkel mit der Außenoberfläche (5) der Lagerbuchse (1) bildet, wobei die erste Oberfläche (10.1) dafür gestaltet ist, sich in Kontakt mit dem Gehäuse (2) zu befinden.

4. Lagerbuchse (1) nach Anspruch 3, wobei der Flansch (10) die Form eines durchgängigen Kranzes um die Außenoberfläche (5) aufweist.

5. Lagerbuchse (1) nach einem vorhergehenden Anspruch, wobei die verformbare Spitze (9) die Form eines durchgängigen Kranzes um die Endoberfläche (6, 7) aufweist.

6. Lagerbuchse (1) nach einem vorhergehenden Anspruch, wobei die verformbare Spitze (9) eine erste Oberfläche (9.1) und eine zweite Oberfläche (9.2) umfasst, wobei die erste Oberfläche (9.1) ein Abschnitt der Außenoberfläche (5) der Lagerbuchse (1) ist und wobei eine von der ersten Endoberfläche (6) und der zweiten Endoberfläche (7) eine Rille (8) umfasst, die sich in der Nähe der Außenoberfläche (5) der Lagerbuchse (1) befindet, so dass die zweite Oberfläche (9.2) der verformbaren Spitze (9) ein Abschnitt der Oberfläche der Rille (8) ist.

7. Lagerbuchse (1) nach Anspruch 6, wobei die Rille (8) eine V-Rille ist.

8. Lagerbuchse (1) nach einem vorhergehenden Anspruch, wobei die Lagerbuchse (1) mindestens einen Schmierkanal (13) mit einer Längsachse umfasst, wobei der Schmierkanal (13) die Außenoberfläche (5) mit der Innenoberfläche (4) verbindet.

9. Lagerbuchse (1) nach Anspruch 8, wobei die Längsachse des Schmierkanals (13) einen Winkel von nicht Null mit der radialen Richtung der Lagerbuchse (1) bildet.

10. Lagerbuchse (1) nach Anspruch 8 oder 9, wobei sie mehr als einen Schmierkanal (13) umfasst, wobei die Schmierkanäle (13) um die Außenoberfläche (5) verteilt sind und die Außenoberfläche (5) außerdem eine periphere Rille (14) umfasst, die sich entlang der Außenoberfläche (5) zwischen den Schmierkanälen (13) erstreckt.

11. Reparaturverfahren für ein beschädigtes Gehäuse (2) für ein Lager (3), wobei das Verfahren die folgenden Schritte umfasst:
- Bereitstellen einer Lagerbuchse (1) nach Anspruch 1,
- maschinelles Bearbeiten der Innenoberfläche des beschädigten Gehäuses (2),
- Einsetzen der Lagerbuchse (1) in das Gehäuse (2) nach dem maschinellen Bearbeiten der Innenoberfläche des beschädigten Gehäuses (2) und
- Rundkneten nur der verformbaren Spitze (9), die sich in dem äußeren radialen Abschnitt befindet, gegen das Gehäuse (2).

12. Reparaturverfahren für ein beschädigtes Gehäuse (2) eines Lagers (3) nach Anspruch 11, wobei das Verfahren zusätzlich die folgenden Schritte umfasst:
- Bereitstellen einer Lagerbuchse (1) mit zwei verformbaren Spitzen (9), die sich in dem äußeren radialen Abschnitt befinden, eine in der Außenoberfläche (5) und eine in der Innenoberfläche (4),
- Rundkneten beider verformbaren Spitzen (9) gegen das Gehäuse (2).

13. Reparaturverfahren für ein beschädigtes Gehäuse (2) eines Lagers (3) nach Anspruch 11 oder 12, wobei das Verfahren zusätzlich die folgenden Schritte umfasst:
- Bereitstellen einer Lagerbuchse (1) nach Anspruch 3,
- Einbringen der Lagerbuchse (1) in das Gehäuse (2) von der Endseite (6, 7) aus, die die verformbare Spitze (9) umfasst, bis die erste Oberfläche (10.1) des Flansches (10), die sich an der gegenüberliegenden Seite (6, 7) befindet, in Kontakt mit dem Gehäuse (2) gelangt,
- Rundkneten der verformbaren Spitze (9) gegen das Gehäuse (2).

## Revendications

1. Douille (1) comprenant un élément creux cylindrique d'un seul tenant ayant un axe longitudinal et comprenant :
- une surface interne (4) conçue pour être en contact avec un palier (3),
- une surface externe (5) conçue pour être en contact avec un boîtier (2) et située radialement à l'extérieur de la surface interne (4),
- une première surface d'extrémité (6) située à une extrémité longitudinale de la douille (1) et une seconde surface d'extrémité (7) située à une extrémité longitudinale opposée de la douille (1),
**caractérisée en ce que** la douille (1) comprend une partie radiale externe adjacente à la surface externe (5) et une partie radiale interne adjacente à la surface interne (4) et **en ce que** seule la partie radiale externe comprend au moins une pointe déformable (9), dans laquelle la surface interne (4) de la douille (1) comprend un bord biseauté (11) entre la surface interne (4) et au moins l'une des première et seconde surfaces d'extrémité (6, 7).

2. Douille (1) selon la revendication 1, dans laquelle la partie radiale interne ne comprend pas de pointe déformable (9).

3. Douille (1) selon la revendication 1, dans laquelle la surface externe (5) adjacente à la première surface d'extrémité (6) ou à la seconde surface d'extrémité (7) comprend un rebord (10), le rebord (10) comprenant une première surface (10.1) et une seconde surface (10.2), la première surface (10.1) formant un angle avec la surface externe (5) de la douille (1), ladite première surface (10.1) étant conçue pour être placée en contact avec le boîtier (2).

4. Douille (1) selon la revendication 3, dans laquelle le rebord (10) a une forme de couronne continue autour de la surface externe (5).

5. Douille (1) selon l'une quelconque des revendications précédentes, dans laquelle la pointe déformable (9) a une forme de couronne continue autour de la surface d'extrémité (6, 7).

6. Douille (1) selon l'une quelconque des revendications précédentes, dans laquelle la pointe déformable (9) comprend une première surface (9.1) et une seconde surface (9.2), la première surface (9.1) étant une partie de la surface externe (5) de la douille (1) et dans laquelle l'une de la première surface d'extrémité (6) et de la seconde surface d'extrémité (7) comprend une rainure (8) située à proximité de la surface externe (5) de la douille (1) de sorte que la seconde surface (9.2) de la pointe déformable (9) est une partie de la surface de la rainure (8).

7. Douille (1) selon la revendication 6, dans laquelle la rainure (8) est une rainure en V.

8. Douille (1) selon l'une quelconque des revendications précédentes, dans laquelle la douille (1) comprend au moins un canal de graissage (13) ayant un axe longitudinal, le canal de graissage (13) faisant communiquer la surface externe (5) et la surface interne (4).

9. Douille (1) selon la revendication 8, dans laquelle l'axe longitudinal du canal de graissage (13) forme un angle non nul avec la direction radiale de la douille (1).

10. Douille (1) selon la revendication 8 ou 9, comprenant plusieurs canaux de graissage (13), les canaux de graissage (13) étant répartis autour de la surface externe (5) et la surface externe (5) comprenant également une rainure périphérique (14) s'étendant le long de la surface externe (5) entre les canaux de graissage (13).

11. Procédé de réparation d'un boîtier (2) endommagé d'un palier (3), le procédé comprenant les étapes suivantes :
- la fourniture d'une douille (1) selon la revendication 1,
- l'usinage de la surface interne du boîtier (2) endommagé,
- l'insertion de la douille (1) dans le boîtier (2) après l'usinage de la surface interne du boîtier (2) endommagé, et
- le sertissage uniquement de la pointe déformable (9) située dans la partie radiale externe contre le boîtier (2).

12. Procédé de réparation d'un boîtier (2) endommagé d'un palier (3) selon la revendication 11, dans lequel le procédé comprend en outre les étapes suivantes :
- la fourniture d'une douille (1) ayant deux pointes déformables (9) situées dans la partie radiale externe, une dans la surface externe (5) et une dans la surface interne (4),
- le sertissage des deux pointes déformables (9) contre le boîtier (2).

13. Procédé de réparation d'un boîtier (2) endommagé d'un palier (3) selon les revendications 11 ou 12, dans lequel le procédé comprend en outre les étapes suivantes :
- la fourniture d'une douille (1) selon la revendication 3,
- l'introduction de la douille (1) dans le boîtier (2) depuis le côté d'extrémité (6, 7) comprenant la pointe déformable (9) jusqu'à ce que la première surface (10.1) du rebord (10) située sur le côté opposé (6, 7) entre en contact avec le boîtier (2),
- le sertissage de la pointe déformable (9) contre le boîtier (2).
